# EUROPÄISCHE PATENTSCHRIFT

(11) **EP 1 911 428 B1**
(45) Veröffentlichungstag und Bekanntmachung des Hinweises auf die Patenterteilung: **15.06.2011**
(21) Anmeldenummer: 07117182.1
(22) Anmeldetag: 25.09.2007
(51) Int. Cl.: A61G 5/04

(54) **Motorische Antriebsvorrichtung zum Antreiben eines Beförderungsmittels**
Power device for powering a conveying device
Dispositif d'entraînement motorisé pour l'entraînement d'un moyen de transport

(30) Priorität: 13.10.2006 DE 102006049057
(43) Veröffentlichungstag der Anmeldung: 16.04.2008
(73) Patentinhaber: Ulrich Alber GmbH, 72461 Albstadt-Tailfingen (DE)
(72) Erfinder: Scheck, Franz, 72336, Balingen (DE)
(74) Vertreter: Staudt, Hans-Peter

(56) Entgegenhaltungen:
- EP-A- 0 419 085
- EP-A- 0 769 286
- DE-C1- 19 958 994
- US-A- 5 348 326

## Beschreibung

Die Erfindung betrifft eine motorische Antriebsvorrichtung zum Antreiben eines Beförderungsmittels, insbesondere eines manuell antreibbaren Rollstuhls.

Rollstühle werden häufig von älteren Personen benötigt. Deren Lebensgefährten, die den Rollstuhl meistens schieben, haben ebenfalls oftmals schon ein fortgeschrittenes Alter erreicht und gelangen beim Schieben von Rollstühlen mitunter schnell an ihre Leistungsgrenze. Für ältere Personen, die einen Rollstuhl schieben, stellen daher Steigungen und Gefälle oftmals unüberwindbare Hindernisse dar.

Zur Unterstützung des Antriebs von Rollstühlen sind Schiebehilfen bekannt, die an einem Rollstuhl befestigbar sind und von der den Rollstuhl schiebenden Begleitperson betätigt werden können. Eine derartige Schiebehilfe beziehungsweise Antriebs- und Bremshilfsvorrichtung für Rollstühle ist aus der EP 0 770 371 A1 bekannt. Bezüglich der grundsätzlichen Funktion, der Wirkungsweise und der Befestigungsmöglichkeiten an einem Rollstuhl wird explizit auf diese Druckschrift Bezug genommen. Die aus dieser Druckschrift bekannte motorische Antriebsvorrichtung, im Folgenden auch Schiebehilfe oder Brems-/Schiebehilfe genannt, verfügt neben ihrem Antriebsmotor zum Antreiben des Antriebsrades über einen Hubmotor. Mittels dieses Hubmotors kann das Antriebsrad, wenn die Schiebehilfe an einem Rollstuhl montiert ist, wahlweise von der Fahrbahn abgehoben oder auf die Fahrbahn abgesenkt und mit einer bestimmten Anpresskraft an die Fahrbahn angedrückt werden.

EP 0 769 286 offenbart eine motorische Antriebsvorrichtung zum Antreiben eines Beförderungsmittels mit einer manuell bedienbarer Hebevorrichtung des Antriebrades.

Der Erfindung liegt die Aufgabe zugrunde, eine Schiebehilfe der in Rede stehenden Art dahingehend weiterzuentwickeln, dass sie einfacher aufgebaut, kleiner in Abmessungen und Gewicht und kostengünstiger herstellbar ist.

Diese Aufgabe wird durch eine motorische Antriebsvorrichtung gemäß Patentanspruch 1 gelöst. Die erfindungsgemäße motorische Antriebsvorrichtung (Schiebehilfe) zum Antreiben eines Beförderungsmittels, insbesondere eines manuell antreibbaren Rollstuhls, weist mindestens ein motorisch antreibbares Antriebsrad auf, das wahlweise von einer Ruhestellung, in der es von einer Fahrbahn abgehoben ist, in eine Betriebsstellung bringbar ist, in der es auf der Fahrbahn aufliegt. Mit dem Antriebsrad verbunden ist ein Federelement, das dazu ausgelegt ist, das mindestens eine Antriebsrad in der Betriebsstellung mit einer vorbestimmten Anpresskraft auf die Fahrbahn zu drücken. Das Federelement weist eine definierte Umschalt-Endstellung auf und ist hierzu operativ mit einem Umschalt-Mechanismus verbunden. Der Umschalt-Mechanismus ermöglicht in der Umschalt-Endstellung des Federelements alternierend ein Sperren des Federelements und ein Lösen zum Ausfahren des Federelements. Mit anderen Worten, wenn die vordefinierte Umschalt-Endstellung des Federelements erreicht wird, erfolgt ein entsprechendes Umschalten. Der Umschalt-Mechanismus kann in einer bevorzugten Ausführungsform in das Federelement integriert sein. Es besteht allerdings auch die Möglichkeit, den Umschalt-Mechanismus als von dem Federelement separates Bauteil bereitzustellen und lediglich operativ mit dem Federelement so zu verbinden, dass das Umschalten in der Umschalt-Endstellung erfolgen kann.

Die erfindungsgemäße Schiebevorrichtung weist zudem ein Betätigungselement auf, das dazu ausgelegt ist, das mindestens eine Antriebsrad anzuheben. Dieses Anheben kann sowohl aus der Ruhestellung heraus als auch aus der Betriebsstellung heraus bewirkt werden. Wird bei einem derartigen Anheben über die Ruhestellung hinaus die Umschalt-Endstellung des Federelements erreicht, bewirkt der Umschalt-Mechanismus einen Umschaltvorgang.

Das Betätigungselement kann beispielsweise ein Fußhebel sein. Dem Fachmann stehen jedoch selbstverständlich auch andere Ausgestaltungen eines Bestätigungselements aufgrund seines Fachwisssens zur Verfügung, mit denen der beschriebene Vorgang des Anhebens des mindestens einen Antriebsrades möglich ist.

Die erfindungsgemäße Schiebevorrichtung kann somit auf einfache Art und Weise ein Anheben beziehungsweise Absenken des Antriebsrades ermöglichen. Das hierzu von einer Bedienperson zu betätigende Betätigungselement kann eine Ruhestellung einnehmen, in der es mit dem mindestens einen Antriebsrad nicht in Eingriff steht. Vorzugsweise, insbesondere dann, wenn das Betätigungselement als Fußhebel ausgeführt ist, nimmt das Betätigungselement bei betriebsbereit an einen Rollstuhl angekoppeltem Zustand der Schiebehilfe eine im wesentlichen senkrecht zu Fahrbahn ausgerichtete Stellung ein. Hierdurch kann das Betätigungselement platzsparend und optisch ansprechend angeordnet werden.

Bei einer bevorzugten Ausführungsform der Erfindung sind zwei Antriebsräder vorgesehen. Beide Antriebsräder können von einem gemeinsamen Betätigungselement angehoben werden. Vorzugsweise sind die beiden Antriebsräder gemeinsam mit einer den Antriebsmotor und ein fakultativ bereitgestelltes Getriebe aufweisenden Antriebseinheit anhebbar beziehungsweise absenkbar.

Der Umschalt-Mechanismus des Federelements kann nach dem sogenannten Push-Push-Prinzip ausgeführt sein, das beispielsweise aus der Verwendung bei Kugelschreibern bekannt ist.

Bei einer bevorzugten Ausführungsform der Erfindung ist ein Verriegelungselement vorgesehen, das bewirkt, dass das Federelement bei einer vorbestimmten Stellung des Betätigungselements seine Umschalt-Endstellung nicht erreichen kann. Die diesbezügliche vorbestimmte Stellung des Betätigungselements ist vorzugsweise die Ruhestellung des Betätigungselements, in der dieses nicht mit dem mindestens einen Antriebsrad in Eingriff steht. Das Betätigungselement kann mit einer Betätigungselement-Schwenkwelle verbunden sein und das Verriegelungselement kann auf der Betätigungselement-Schwenkwelle angeordnet sein.

Das Verriegelungselement bewirkt, dass das mindestens eine Antriebsrad nicht unbeabsichtigt, beispielsweise bei Überfahren eines großen Hindernisses, über seine Ruhestellung hinaus so weit angehoben wird, dass das Federelement seine Umschalt-Endstellung erreicht und der Umschalt-Mechanismus von dem Betriebszustand, in dem das Ausfahren des Federelements möglich ist, der in der Betriebsstellung des Antriebsrades vorliegt, auf den Betriebszustand des Sperrens des Federelements umschaltet, was zur Folge hätte, dass sich das mindestens eine Antriebsrad nach dem Überfahren des Hindernisses nicht mehr selbsttätig mittels des Federelements auf die Fahrbahn absenken könnte.

Die Erfindung wird nachfolgend anhand eines bevorzugten Ausführungsbeispiels weiter erläutert unter Bezugnahme auf die Zeichnung, in der
Fig. 1 eine erste perspektivische Ansicht einer bevorzugten Ausführungsform der erfindungsgemäßen Antriebsvorrichtung ist,
Fig. 2 eine zweite perspektivische Ansicht der Antriebsvorrichtung gemäß Fig. 1 ist,
Fig. 3 eine Seitenansicht der Antriebsvorrichtung gemäß Fig. 1 ist,
Fig. 4 eine perspektivische Darstellung der Antriebsvorrichtung gemäß Fig. 1 sowie eines manuell antreibbaren Rollstuhls ist, an welchem die Antriebsvorrichtung ankoppelbar ist,
Fig. 5 eine Darstellung des Rollstuhls und der Antriebsvorrichtung gemäß Fig. 4 in betriebsbereit angekoppeltem Zustand ist,
Fig. 6A einen ersten Teilschnitt durch die Antriebsvorrichtung gemäß Fig. 1 zeigt in einer Stellung, in der diese mit einem Rollstuhl verbunden ist und sich sowohl die Antriebsräder als auch das Betätigungselement in der Ruhestellung befinden,
Fig. 6B ein zweiter Teilschnitt gemäß Fig. 6A ist,
Fig. 6C eine vergrößerte Darstellung eines Details aus Fig. 6B zur Erläuterung der Stellung des Verriegelungselements ist,
die Figuren 7A bis 7C den Figuren 6A bis 6C entsprechen, wobei sich bei den Figuren 7A bis 7C die Antriebsräder in der Ruhestellung befinden und das Bestätigungselement in einer Bereitschaftsstellung,
die Figuren 8A bis 8C den Figuren 6 und 7 entsprechen, wobei sich der Betätigungshebel in Endanschlag befindet, die Antriebsräder voll angehoben sind und das Federelement seine Umschalt-Endstellung erreicht hat,
die Figuren 9A bis 9C den Figuren 6 bis 8 entsprechen, wobei sich die Antriebsräder in der Betriebsstellung befinden und das Fußpedal in Bereitschaftsstellung ist,
die Figuren 10A bis 10C den Figuren 9A bis 9C entsprechen, wobei sich das Fußpedal in der Ruheposition befindet,
die Figuren 11A bis 11C entsprechen den Figuren 10A bis 10C, wobei die Antriebsräder zwischen den großen Laufrädern des Rollstuhls ein Hindernis überfahren und entsprechend angehoben sind, und
Fig. 12 in einer schematischen Abwicklung das Push-Push-Funktionsprinzip zeigt.

Es versteht sich, dass die Zeichnungen zum Zwecke der besseren Darstellung teilweise nicht maßstabsgetreu und/oder schematisiert und vereinfacht dargestellt sind.

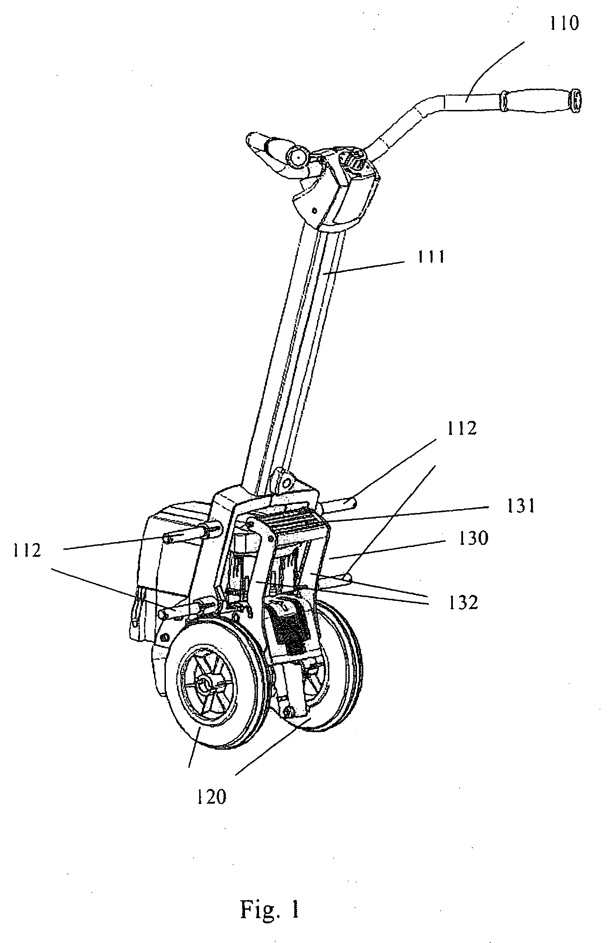

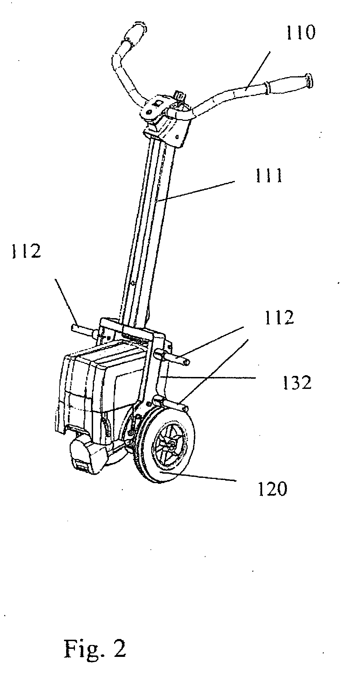

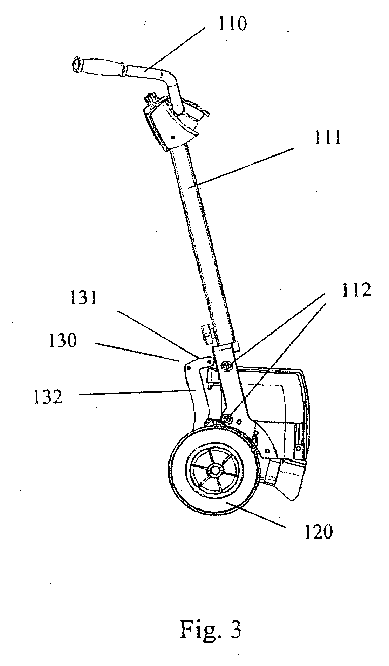

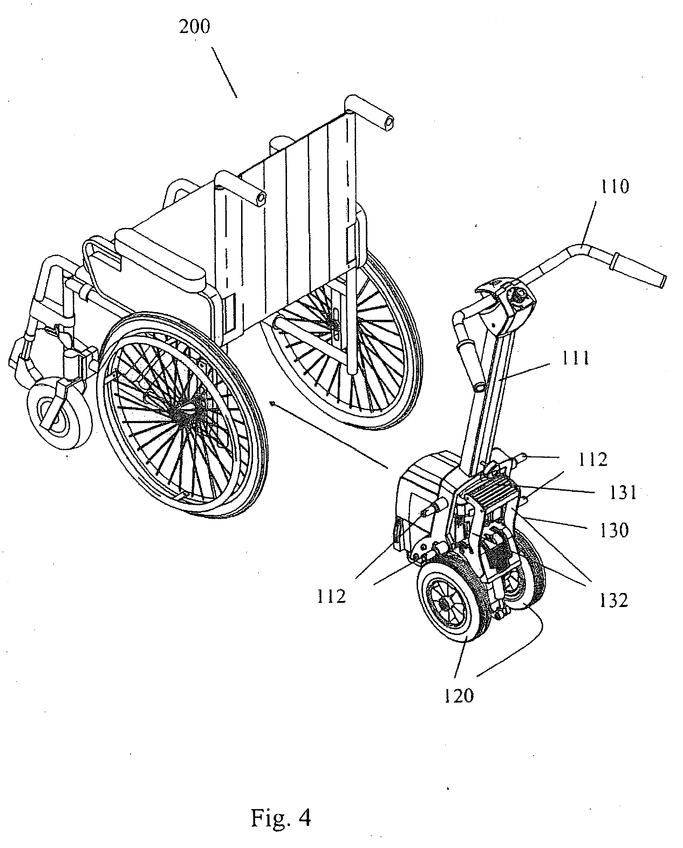

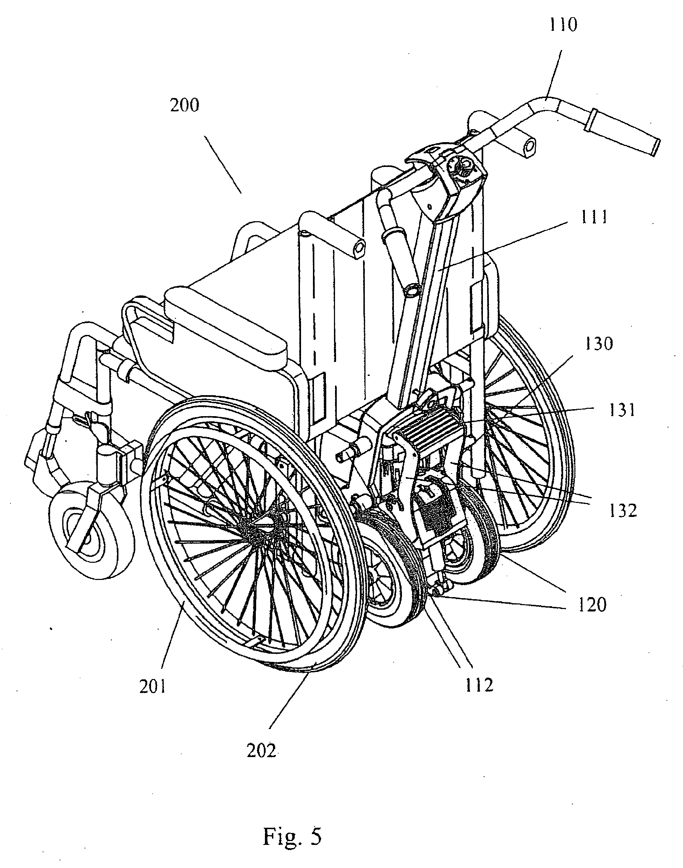

Die Fig. 1 bis 3 zeigen eine Ausführungsform der erfindungsgemäßen Schiebehilfe mit einer Lenkstange 110, einer Schubstange 111, Befestigungselementen 112, zwei mittels eines elektrischen Antriebsmotors antreibbaren Antriebsrädern 120 und ein als Fußhebel ausgeführtes Betätigungselement 130. Wie aus Fig. 4 ersichtlich, kann die Schiebehilfe von hinten an einen handelsüblichen Rollstuhl 200 herangefahren werden, um die in Fig. 5 gezeigte Endstellung zu erreichen, in welcher die Schiebehilfe mit dem Rollstuhl 200 funktionsfähig verbunden werden kann. Hierzu können an dem Rollstuhl 200 Haltemittel angebracht werden, die mit den Befestigungselementen 112 der Schiebehilfe in Eingriff bringbar sind. Zum Zwecke der anschaulichen Darstellung sind diese Haltemittel in Fig. 5 nicht gezeigt. Geeignete Haltemittel sind beispielsweise in der DE 10 2005 008 826 B3 offenbart.

Wenn die Schiebehilfe mit dem Rollstuhl 200 verkoppelt ist, wie in Fig. 5 gezeigt, können die Antriebsräder 120 mittels des Fußhebels 130 angehoben oder abgesenkt werden. In angehobenem Zustand kann der Rollstuhl wie üblich manuell betrieben werden. Der Antrieb kann entweder über Greifringe 201 an den Laufrädern 202 durch die im Rollstuhl sitzende Person selbst erfolgen oder durch eine den Rollstuhl schiebende Hilfsperson. Das Anheben der Antriebsräder 120 bietet somit den Vorteil, dass für einen manuellen Betrieb die Schiebehilfe nicht von dem Rollstuhl 200 abgekoppelt werden muss.

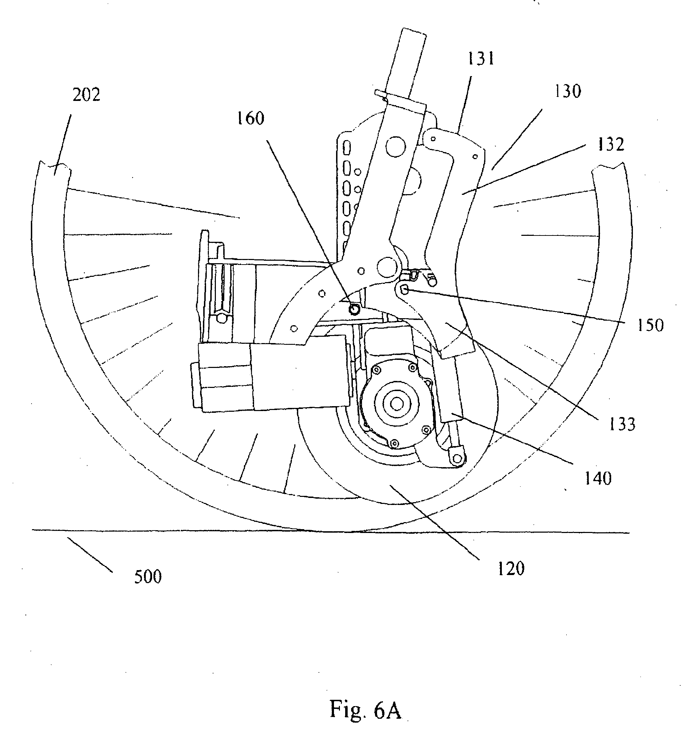

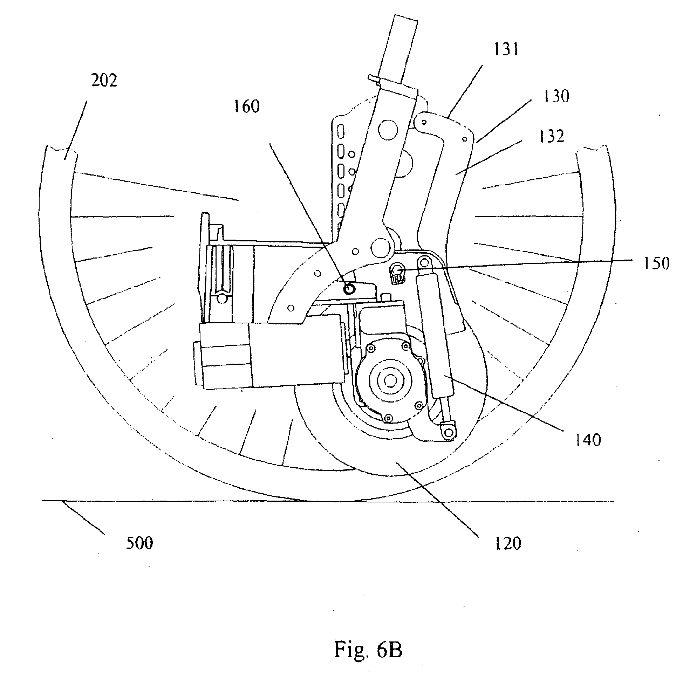

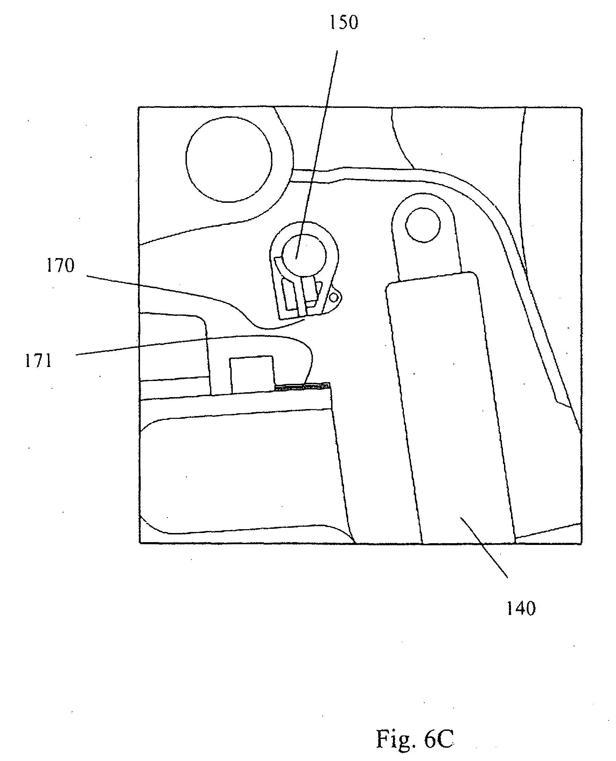

Soll nunmehr die Antriebsvorrichtung in betriebsbereiten Zustand versetzt werden und Antriebskraft zum Antreiben beziehungsweise Bremsen des Rollstuhls 200 auf die Fahrbahn aufbringen, können die Antriebsräder 120 mittels des Fußhebels 130 abgesenkt werden. Der Vorgang des Absenkens der Antriebsräder 120 sowie des Anhebens derselben wird nachfolgend anhand der Figuren 6 bis 11 beschrieben.

Fig. 6A zeigt eine vereinfachte Schnittdarstellung unter Weglassung der für die Erläuterung des Vorgangs des Anhebens und Absenkens der Antriebsräder nicht erforderlichen Komponenten. Gezeigt ist ein Segment eines Laufrades 202 eines Rollstuhls sowie eines der beiden Antriebsräder 120, welches von der Fahrbahn 500 abgehoben ist und sich in der Ruhestellung befindet. Das als Fußhebel ausgeführte Betätigungselement 130 weist, wie aus Fig. 1 ersichtlich, eine Fußbrücke 131 und zwei Hebelelemente 132 auf, von denen in Fig. 6A ein Hebelelemente 132 dargestellt ist. Der Fußhebel 130 ist um eine Betätigungselement-Schwenkwelle 150 verschwenkbar. In den Fig. 6A und 6B befindet sich der Fußhebel 130 in seiner Ruhestellung, in der er im wesentlichen senkrecht zur Fahrbahn 500 ausgerichtet ist.

Fig. 6B unterscheidet sich von Fig. 6A lediglich hinsichtlich der Schnittebene, welche bei Fig. 6B so gewählt ist, dass ein Federelement 140 ganz dargestellt ist, während es in Fig. 6A teilweise geschnitten ist, um das Hubende 133 des Hebelelements 132 zu zeigen.

Das Federelement 140 ist mit seinem einen Ende an einem nicht dargestellten Teil des Grundkörpers der Schiebehilfe befestigt. Die Antriebsräder, die mit dem Antriebsmotor und einem Getriebe eine gemeinsam verschwenkbare Antriebseinheit bilden, sind mit dem anderen Ende, d.h. mit der Hubstange des Federelements 140 verbunden. Das Federelement 140 ist als Gasdruckfeder ausgeführt und weist in vollständig eingeschobenem Zustand eine Umschalt-Endstellung auf, in der ein Umschalt-Mechanismus (nicht dargestellt) einen Umschaltvorgang zwischen zwei Betriebszuständen bewirkt. Der erste Betriebszustand ist ein Zustand, in dem das Federelement gesperrt ist, so dass ein Ausfahren der Hubstange und damit Absenken der Antriebsräder 120 nicht möglich ist. Dieser Zustand ist in den Figuren 6A und 6B dargestellt. Wird das Federelement 140 über den in den Figuren 6A und 6B dargestellten Zustand weiter zusammengedrückt, so dass die Umschalt-Endstellung erreicht wird, so bewirkt der Umschalt-Mechanismus ein Umschalten dahingehend, dass ein Ausfahren der Hubstange möglich wird, was zu einem Absenken der Antriebsräder 120 führt (wird im Folgenden weiter erläutert).

Ein geeignetes Federelement 140 ist unter der Bezeichnung LIFT-O-MAT® von der Firma Stabilos GmbH, Koblenz, Deutschland erhältlich.

Fig. 6C zeigt einen vergrößerten Ausschnitt im Bereich der Betätigungselement-Schwenkwelle 150, auf der ein Verriegelungselement 170 angeordnet ist, welches sich zusammen mit der Betätigungselement-Schwenkwelle 150 dreht. Die Funktion des Verriegelungselements 170 und ihr Zusammenwirken mit einem Anschlagelement 171 wird weiter unten erläutert.

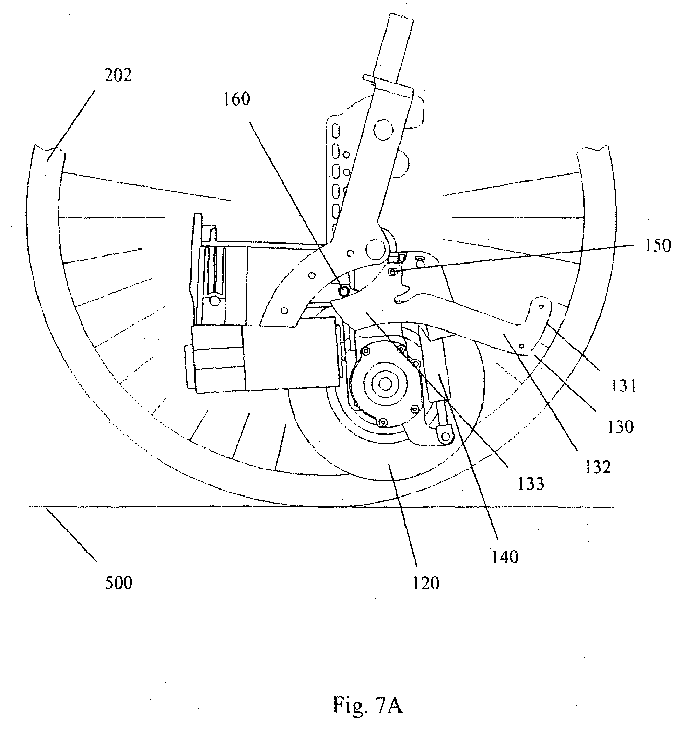

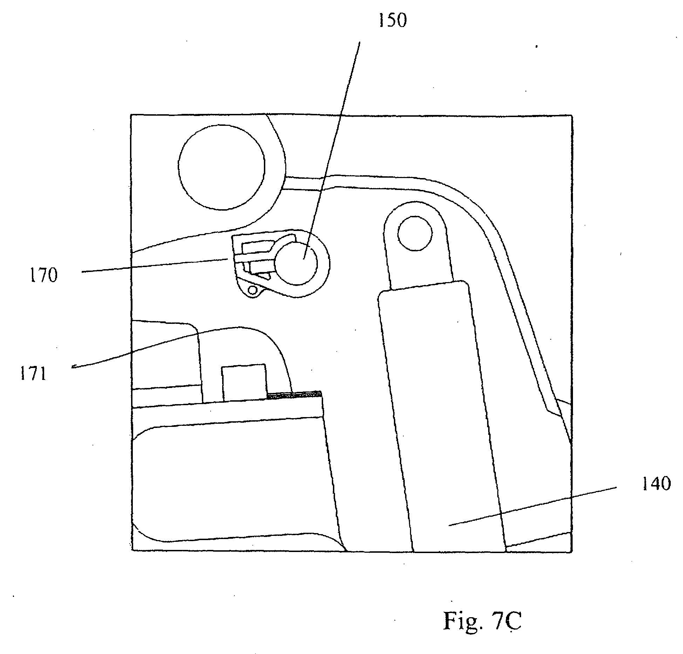

Die Figuren 7A bis 7C entsprechen den Figuren 6A bis 6C und unterscheiden sich lediglich dadurch, dass der Fußhebel aus seiner Ruhestellung gemäß den Figuren 6A und 6B, in der er im wesentlichen senkrecht zur Fahrbahn 500 steht, um die Bestätigungselement-Schwenkwelle 150 im Uhrzeigersinn in eine Bereitschaftsstellung verschwenkt ist. In dieser Bereitschaftsstellung gelangt das Hubende 133 in Eingriff mit einem Hubzapfen 160, der mit der die Antriebsräder, den Antriebsmotor und das Getriebe aufweisenden schwenkbaren Antriebseinheit verbunden ist. Aus Fig. 7C ist im Vergleich mit Fig. 6C ersichtlich, dass mit dem Verschwenken des Fußhebels 130 auch das auf der Betätigungselement-Schwenkwelle 150 angeordnete Verriegelungselement 170 um etwa 90° im Uhrzeigersinn verschwenkt wurde.

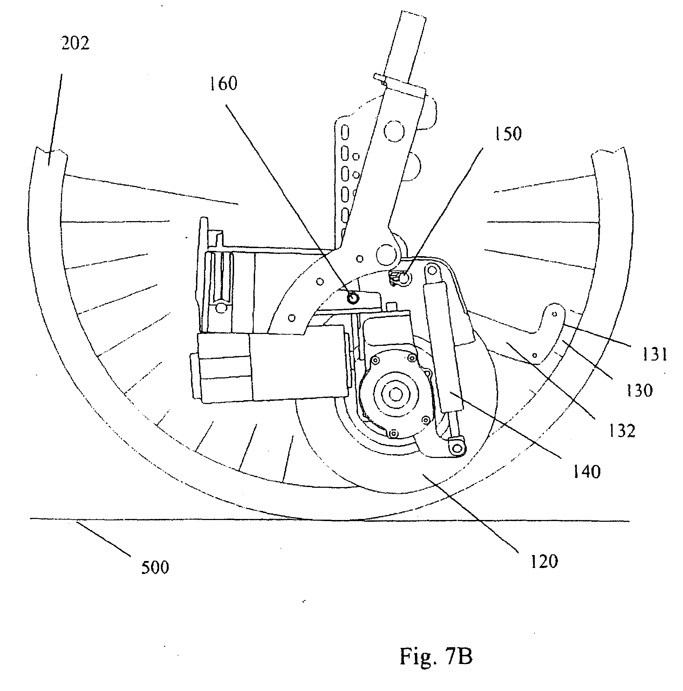

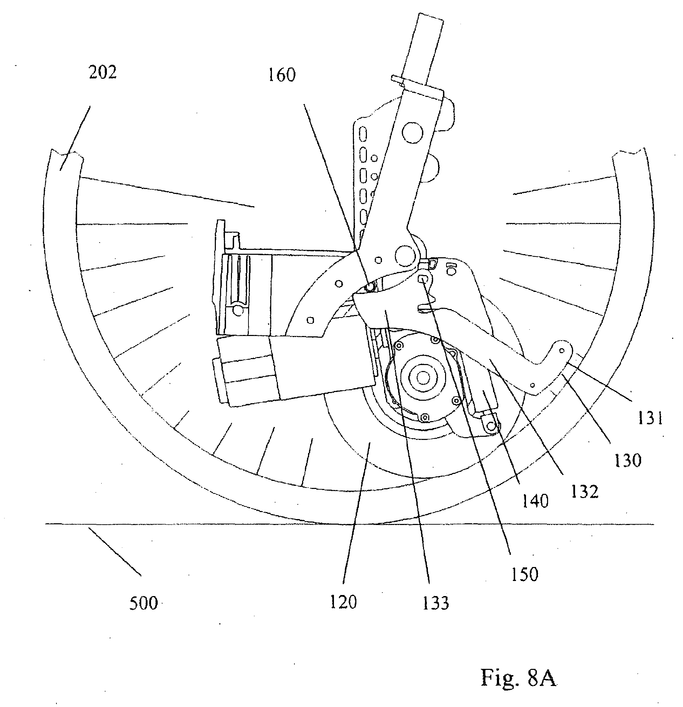

Die Figuren 8A bis 8C entsprechen den Figuren 6A bis 6C und 7A bis 7C und unterscheiden sich von diesen dadurch, dass der Fußhebel 130 gegenüber der Bereitschaftsstellung gemäß den Figuren 7A bis 7C nochmals weiter im Uhrzeigersinn um die Betätigungselement-Schwenkwelle 150 verschwenkt wurde. Hierdurch wird die Antriebseinheit einschließlich der Antriebsräder 120 angehoben und das Federelement 140 soweit zusammengedrückt, dass dessen Umschalt-Endstellung erreicht wird. Der in dem Federelement 140 vorgesehene Umschalt-Mechanismus bewirkt hierbei, dass bei einem anschließenden Absenken der Antriebsräder 120 das Federelement 140 über die Ruhestellung gemäß den Figuren 6 und 7 hinaus ausgefahren werden kann.

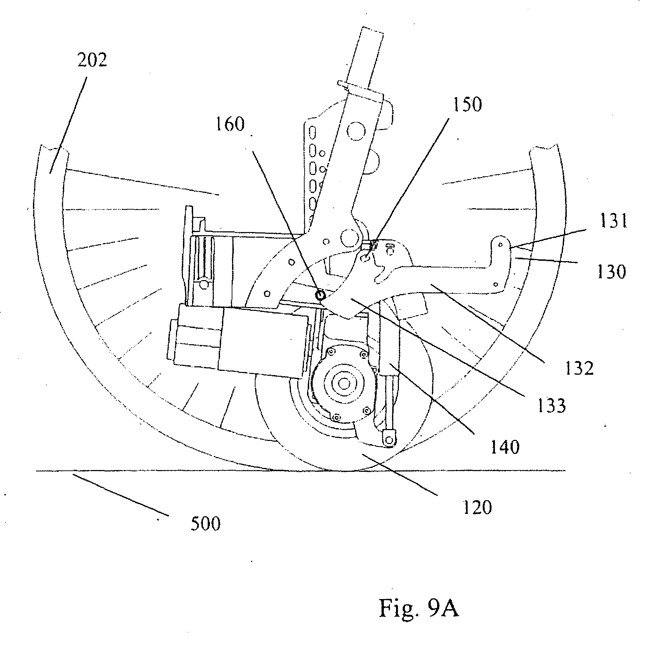

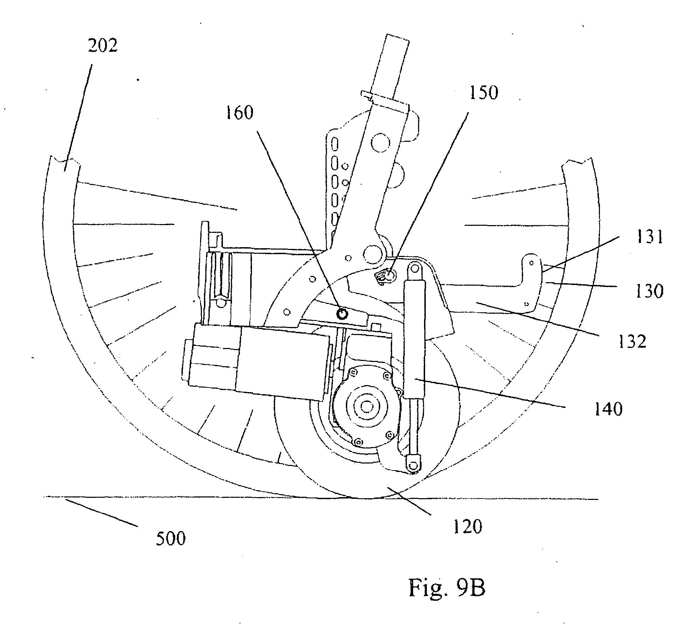

Die Figuren 9A bis 9C zeigen den Betriebszustand, bei dem nach Erreichen der Umschalt-Endstellung gemäß den Figuren 8A bis 8C der Fußhebel 130 losgelassen wurde und zurück in die Bereitschaftsstellung gemäß den Figuren 7A und 7B zurückgekehrt ist. Da durch das vollständige Anheben gemäß den Figuren 8A bis 8C das zuvor erläuterte Umschalten des Federelements 140 bewirkt wurde, sind die Antriebsräder 120 nunmehr auf die Fahrbahn 500 abgesenkt und werden mit einer vorbestimmten Anpresskraft durch das Eigengewicht der Antriebseinheit sowie eine durch die Auslegung des Federelements 140 vorbestimmte Anpresskraft auf der Fahrbahn 500 aufliegt. Die Anpresskraft des Federelements 140 kann bis auf den Wert Null zurückgehen, insbesondere dann, wenn sich zwischen den beiden Laufrädern 202 des Rollstuhls eine Vertiefung befindet.

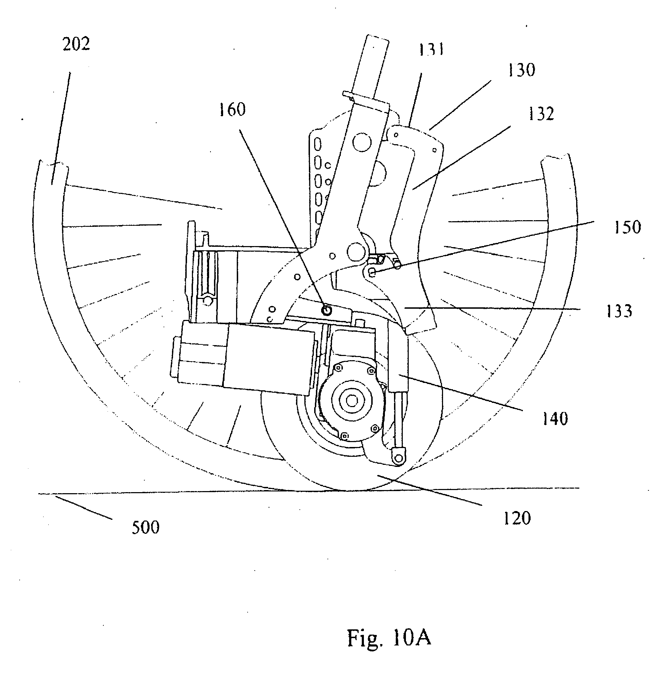

Die Figuren 10A bis 10C entsprechen den Figuren 9A bis 9C, wobei lediglich der Fußhebel 130 zurück in seine Ruhestellung verschwenkt wurde. Dies ist der Betriebszustand, in dem die Schiebehilfe üblicherweise als Antriebsvorrichtung genutzt wird. Der Fußhebel 130 steht der Bedienperson nicht im Wege, die Antriebsräder 120 liegen auf der Fahrbahn 500 auf und die Schiebehilfe kann wunschgemäß mit entsprechend eingestellter Geschwindigkeit zum Antrieb in Vorwarts- oder Rückwartsfahrt oder als Bremshilfe verwendet werden.

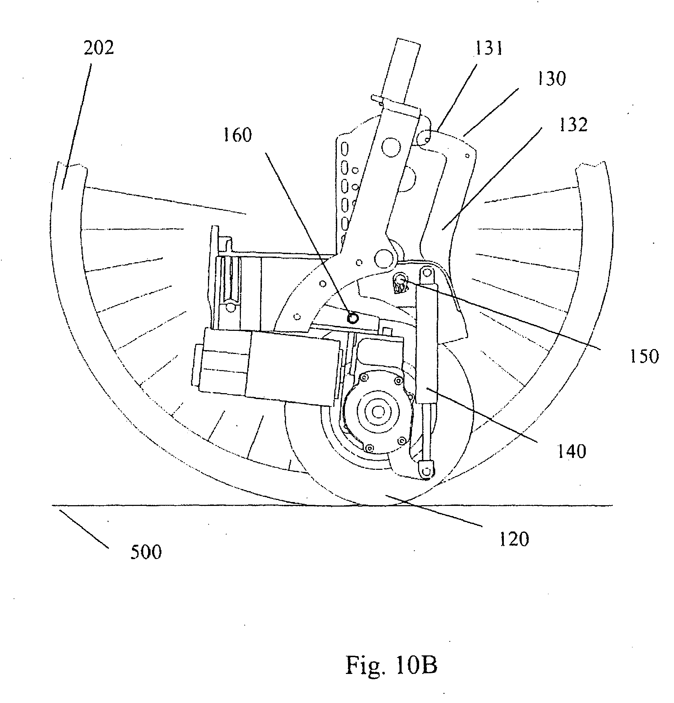

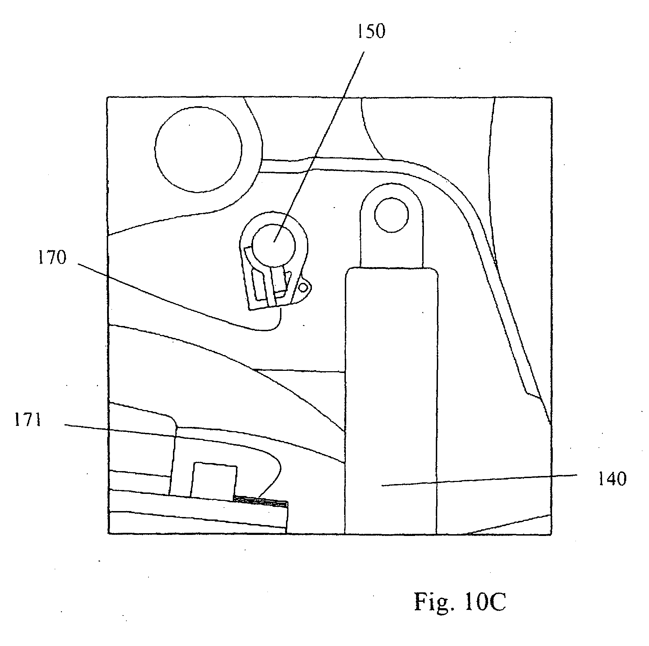

Da sich in den Darstellungen gemäß Fig. 10A und 10B der Fußhebel 130 ebenso wie in den Figuren 6A und 6B in seiner Ruhestellung befindet, nimmt auch das Verriegelungselement 170 in Fig. 10C die gleiche Stellung ein wie in Fig. 6C.

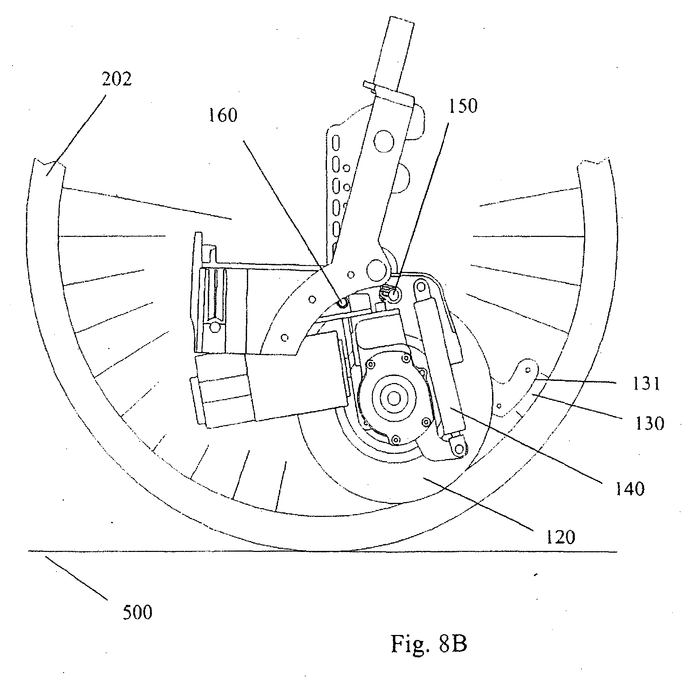

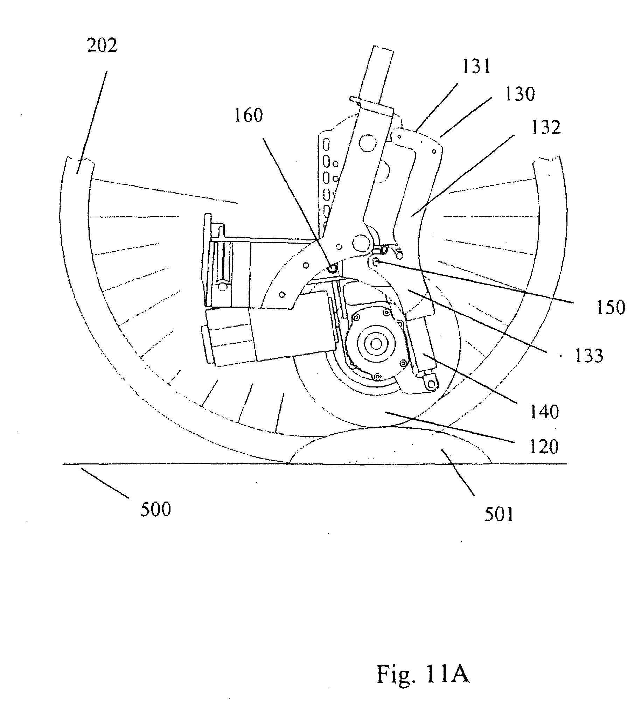

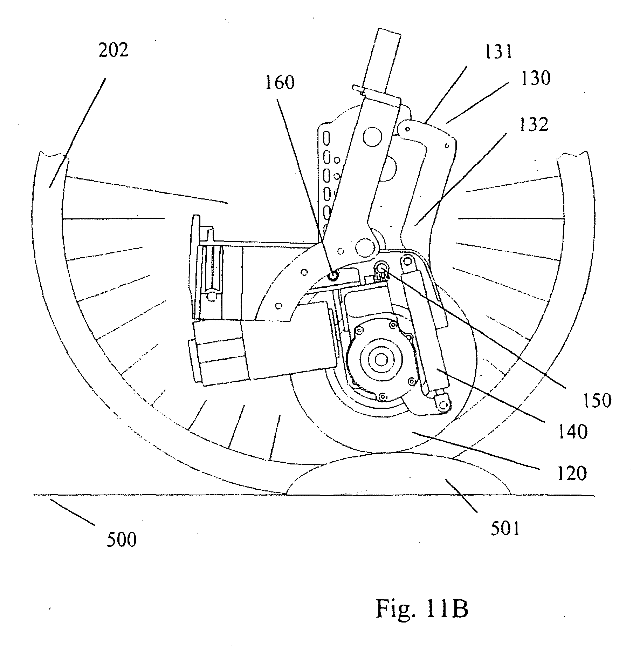

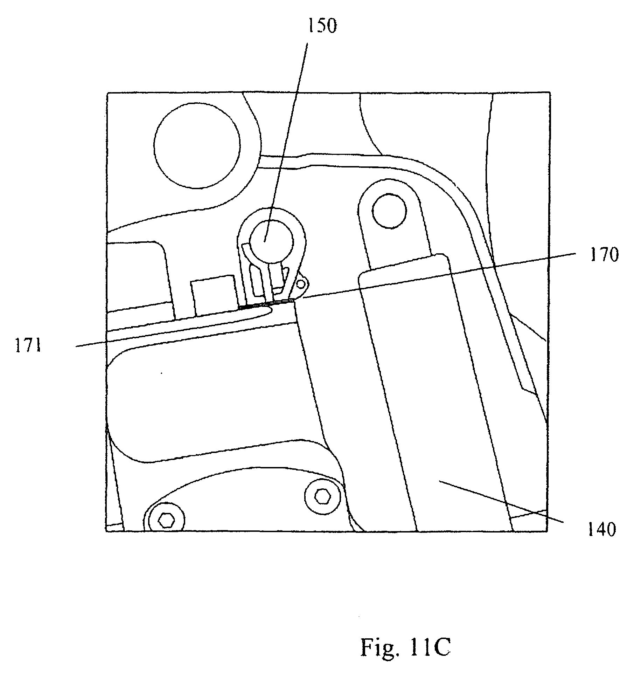

Wenn nun, wie in den Figuren 11A bis 11C dargestellt, beim Betrieb der Schiebehilfe ein Hindernis 501 überfahren wird, welches sich zwischen den Laufrädern 202 des Rollstuhls befindet, werden die Antriebsräder 120 angehoben. Würde hierbei ein vollständiges Anheben über die Ruhestellung der Antriebsräder 120, wie sie in den Figuren 6A und 6B gezeigt ist, hinaus erfolgen, d.h. bis zu der Umschalt-Endstellung des Federelements 140, wie sie in den Figuren 8A und 8B dargestellt ist, hätte dies zur Folge, dass ein erneuter Umschalt-Vorgang im Federelement 140 stattfinden würde, dem zufolge wieder der Betriebszustand eingenommen würde, der ein Sperren des Federelements 140 bewirkt, so dass die Antriebsräder 120 in der in den Figuren 6A, 6B, 7A und 7B gezeigten Ruhestellung verbleiben würden.

Zur Verhinderung dieses unerwünschten Einrastens der Antriebsräder 120 dient das Verriegelungselement 170. Dieses befindet sich in der Ruhestellung des Fußhebels 130 in der Position, wie sie in den Figuren 6C, 10C und 11C gezeigt ist. Das Verriegelungselement 170 sorgt in Verbindung mit dem Anschlagelement 171 dafür, dass ein vollständiges Anheben der Antriebsräder 120 über die Ruhestellung der Antriebsräder 120 hinaus bis zur Umschalt-Endstellung des Federelements 140 nicht möglich ist, wenn sich der Fußhebel 130 in der Ruhestellung befindet.

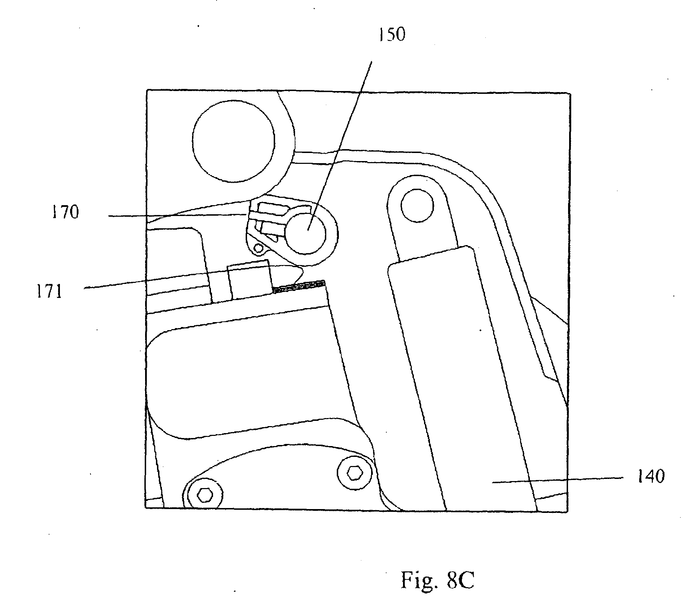

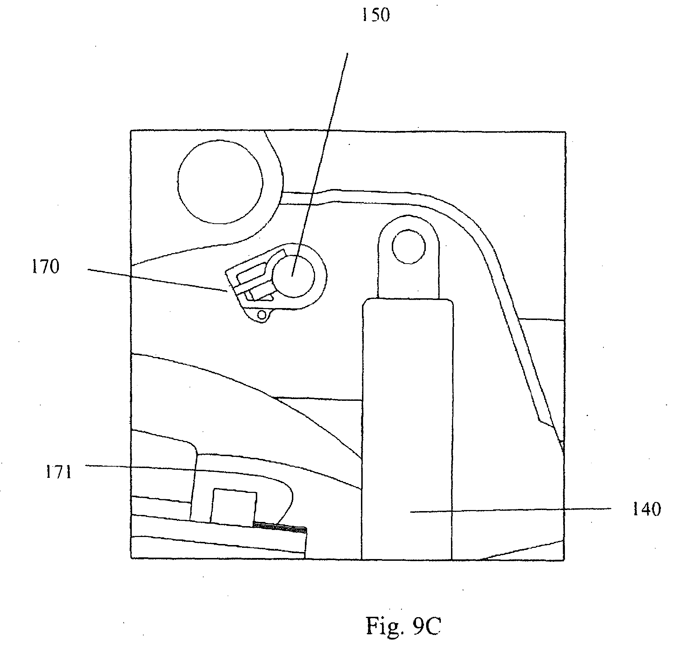

Wenn aus der normalen Betriebsstellung gemäß den Figuren 10A bis 10C heraus die Antriebsräder 120 wieder in ihre Ruhestellung verbracht werden sollen, wird der Fußhebel zunächst in die Bereitschaftsstellung gemäß den Figuren 9A bis 9C verbracht und als dann darüber hinaus in die untere Endstellung gemäß den Figuren 8A bis 8C verbracht. Da in dieser Betriebsstellung das Verriegelungselement 170 verschwenkt ist, wie in den Figuren 9C und 8C gezeigt, gelangt das Anschlagelement 171 nicht mit dem Verriegelungselement 170 in Berührung und lässt das völlige Zusammendrücken des Federelements 140 bis zur Umschalt-Endstellung zu, so dass bei Lösen des Fußhebels 130 wieder die Stellung gemäß den Figuren 7A bis 7C eingenommen wird. Aus dieser Betriebsstellung heraus kann der Fußhebel 130 dann wieder in die Ruhestellung gemäß den Figuren 6A bis 6C verschwenkt werden.

Der Verschwenkungsbereich der Antriebseinheit über die Ruhestellung hinaus bis zu der Position, in der das Federelement 140 die Umschalt-Endstellung einnimmt, der von dem Verriegelungselement 170 in Verbindung mit den Anschlagelement 171 gesperrt wird, kann beispielsweise im Bereich von 5° liegen.

Bei einer bevorzugten Ausführungsform der Erfindung kann das Verriegelungselement 170 nicht fest, sondern verschwenkbar mit der Betätigungselement-Schwenkwelle 150 verbunden sein. Die für die Sperrwirkung erforderliche Schwenkbewegung in einer Drehrichtung kann durch einen Mitnehmerstift bewirkt werden. Die Rückstellung in die andere Drehrichtung wird in diesem Fall durch ein Rückholfeder bewirkt. Diese Ausführungsform verhindert ein Abscheren des Verriegelungselements 170 dann, wenn sich das Betätigungselement, d.h. der Fußhebel 130 in der Bereitschaftsstellung befindet und gleichzeitig die Antriebseinheit bis an den oberen Endanschlag verschwenkt wird, beispielsweise dann, wenn beim Fahrbetrieb der Fußhebel nicht aus der Bereitschaftsstellung heraus in die Ruhestellung gebracht wurde und in diesem Zustand ein großes Hindernis überfahren wird, dass ein entsprechendes Anheben des Verriegelungselements 170 bewirkt.

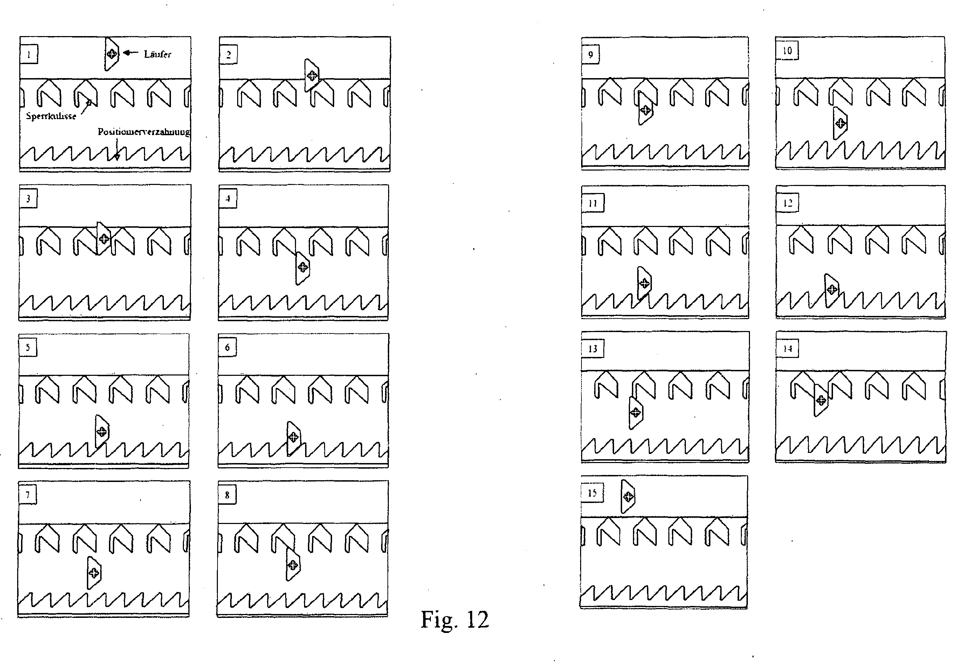

Im Folgenden wird das an sich bekannte Push-Push-Funktionsprinzip, wie es beispielsweise aus der Verwendung von Kugelschreibern bekannt und in dem im Handel erhältlichen Federelement mit der Handelsbezeichnung LIFT-O-MAT® der Firma Stabilos GmbH verwirklicht ist, anhand einer schematischen Abwicklungsdarstellung in 15 auf einander folgenden Momentaufnahmen in Fig. 12 erläutert. In der Abwicklung dargestellt sind ein Läufer, eine Sperrkulisse und eine Positionierverzahnung. In der Darstellung 1 gemäß Fig. 12 befindet sich der Läufer von der Positionierverzahnung ausgesehen außerhalb der Sperrkulisse. Aufgrund entsprechender Abschrägungen des Läufers einerseits und den Elementen der Sperrkulisse andererseits kann der Läufer aus jeder beliebigen Stellung heraus durch die Sperrkulisse hindurch treten (siehe Darstellungen 2 und 3). Wie in Darstellung 4 gezeigt, nimmt er nach dem Durchtritt durch die Sperrkulisse eine Position ein, die kein vollständiges Eindringen in die Positionierverzahnung ermöglichst (siehe Fig. 5). Der vollständige Eintritt in die Positionierverzahnung hat somit zur Folge, dass der Läufer weiter verschoben wird, nämlich nach links in Darstellung 6. Beim Verlassen der Positionierverzahnung nach oben (Darstellung 7) trifft der Läufer auf eine Schräge innerhalb der Sperrkulisse, die ihn in eine Sperrstellung (Darstellung 9) leitet.

Wird der Läufer aus der Sperrstellung gemäß Darstellung 9 erneut in Richtung der Positionierverzahnung verschoben (Darstellung 10), trifft er erneut auf eine Schräge der Positionierverzahnung, welche ein vollständiges Eindringen nicht ohne weitere Verschiebung zulässt (siehe Darstellung 11). Das vollständige Eindringen (Darstellung 12) hat erneut eine Verschiebung des Läufers nach links zufolge. Tritt der Läufer nunmehr aus dieser Position aus der Positionierverzahnung in Richtung Sperrkulisse aus, trifft seine Schräge in einer solchen Position auf die Sperrkulisse (siehe Darstellung 13), dass ein Durchtritt durch die Elemente der Sperrkulisse möglich ist (siehe Darstellung 14). Beim vollständigen Durchtritt durch die Sperrkulisse (Darstellung 15) wird wieder der Anfangszustand gemäß Darstellung 1 erreicht.

## Patentansprüche

1. Motorische Antriebsvorrichtung zum Antreiben eines Beförderungsmittels, insbesondere eines manuell antreibbaren Rollstuhls, wobei die Antriebsvorrichtung aufweist:
mindestens ein motorisch antreibbares Antriebsrad (120), das wahlweise von einer Ruhestellung, in der es von einer Fahrbahn (500) abgehoben ist, in eine Betriebsstellung, in der es auf der Fahrbahn (500) aufliegt, bringbar ist,
**dadurch gekennzeichnet, dass** die Antriebsvorrichtung ein mit dem mindestens einen Antriebsrad verbundenes Federelement (140) umfasst mit einer definierten Umschalt-Endstellung, das dazu ausgelegt ist, das mindestens eine Antriebsrad (120) in der Betriebsstellung mit einer vorbestimmten Anpresskraft auf die Fahrbahn (500) zu drücken, wobei das Federelement (140) mit einem Umschalt-Mechanismus, der in der Umschalt-Endstellung des Federelements alternierend ein Sperren des Federelements und ein Lösen zum Ausfahren des Federelements ermöglicht, operativ verbunden ist, und
ein Betätigungselement (130) umfasst, das dazu ausgelegt ist, das mindestens eine Antriebsrad (120) anzuheben, wobei ein Anheben des mindestens einen Antriebsrades (120) über seine Ruhestellung hinaus bewirkt, dass das Federelement (140) seine Umschalt-Endstellung erreicht, in der der Umschalt-Mechanismus einen Umschaltvorgang zwischen Sperren und Lösen bewirkt.

2. Antriebsvorrichtung nach Anspruch 1, **gekennzeichnet durch** ein Verriegelungselement (170), das bewirkt, dass das Federelement (140) bei einer vorbestimmten Stellung des Betätigungselements (130) seine Umschalt-Endstellung nicht erreichen kann.

3. Antriebsvorrichtung nach Anspruch 1 oder 2, **dadurch gekennzeichnet, dass** das Betätigungselement (130) ein Fußhebel ist.

4. Antriebsvorrichtung nach Anspruch 1, 2 oder 3, **dadurch gekennzeichnet, dass** das Betätigungselement (130) eine Ruhestellung einnehmen kann, in der es nicht mit dem mindestens einen Antriebsrad (120) in Eingriff steht.

5. Antriebsvorrichtung nach Anspruch 4, **dadurch gekennzeichnet, dass** bei betriebsbereit angekoppeltem Zustand der Antriebsvorrichtung das Betätigungselement (130) in der Ruhestellung eine im wesentlichen senkrecht zur Fahrbahn (500) ausgerichtete Stellung einnimmt.

6. Antriebsvorrichtung nach Anspruch 4 oder 5, **dadurch gekennzeichnet, dass** die Ruhestellung die vorbestimmte Stellung des Betätigungselements (130) ist, in der das Verriegelungselement (170) bewirkt, dass das Federelement (140) seine Umschalt-Endstellung nicht erreichen kann.

7. Antriebsvorrichtung nach einem der vorstehenden Ansprüche, **dadurch gekennzeichnet, dass** das Betätigungselement (130) mit einer Betätigungselement-Schwenkwelle (150) verbunden ist und das Verriegelungselement (170) auf der Betätigungselement-Schwenkwelle (150) angeordnet ist.

8. Antriebsvorrichtung nach einem der vorstehenden Ansprüche, **dadurch gekennzeichnet, dass** zwei Antriebsräder (120) vorgesehen sind.

9. Antriebsvorrichtung nach einem der vorstehenden Ansprüche, **dadurch gekennzeichnet, dass** das oder die Antriebsräder (120) gemeinsam mit einer den Antriebsmotor und ein fakultativ bereitgestelltes Getriebe aufweisenden Antriebseinheit anhebbar ist.

10. Antriebsvorrichtung nach einem der vorstehenden Ansprüche, **dadurch gekennzeichnet, dass** der Umschalt-Mechanismus nach dem beispielsweise aus der Verwendung bei Kugelschreibern vorbekannten Push-Push-Prinzip ausgelegt ist.

11. Antriebsvorrichtung nach einem der vorstehenden Ansprüche, **dadurch gekennzeichnet, dass** der Umschalt-Mechanismus in das Federelement (140) integriert ist.

## Claims

1. Motor drive device for driving a transport means, in particular a manually driven wheel chair, wherein the drive device comprises:
at least one drive wheel (120) which is adapted to be driven by a motor and which from an idle position in which it is lifted from a track (500) can be brought into an operating position in which it rests on the track (500),
**characterized in that** the drive device comprises a spring element (140) connected with said at least one drive wheel having a defined switch end position, said spring element (140) being adapted to press the at least one drive wheel (120) in its operation position onto the track (500) by a predetermined contact force, wherein said spring element (140) is operatively connected to a switch mechanism which in the switch end position of the spring element alternatively permits to lock the spring element and to release it for extending the spring element, and
an operating element (130) which is adapted to lift the at least one drive wheel (120), wherein lifting of the at least one drive wheel (120) beyond its idle position has the effect that the spring element (140) reaches its switch end position in which the switch mechanism causes a switch operation between locking and releasing.

2. Drive device according to claim 1, **characterized by** a locking element (170) which has the effect that said spring element (140) cannot reach its switch end position when said operating element (130) is in a predetermined position.

3. Drive device according to claim 1 or 2, **characterized in that** said operating element (130) is a foot lever.

4. Drive device according to claim 1, 2 or 3, **characterized in that** said operating element (130) can take an idle position in which it is not engaged with the at least one drive wheel (120).

5. Drive device according to claim 4, **characterized in that** in the operatively coupled state of the drive device, the operating element (130) in the idle position takes a position which is oriented essentially perpendicularly to the track (500).

6. Drive device according to claim 4 or 5, **characterized in that** the idle position is the predetermined position of the operating element (130) in which the locking element (170) has the effect that the spring element (140) cannot reach its switch end position.

7. Drive device according to one of the preceding claims, **characterized in that** the operating element (130) is connected with an operating element swing shaft (150), and the locking element (170) is arranged on the operating element swing shaft (150).

8. Drive device according to one of the preceding claims, **characterized in that** two drive wheels (120) are provided.

9. Drive device according to one of the preceding claims, **characterized in that** the drive wheel or drive wheels (120) can be lifted together with a drive unit comprising the drive motor and an optionally provided transmission.

10. Drive device according to one of the preceding claims, **characterized in that** the switch mechanism is designed according to the push-push principle known, for example, from the use in ballpoint pens.

11. Drive device according to one of the preceding claims, **characterized in that** the switch mechanism is integrated in the spring element (140).

## Revendications

1. Dispositif d'entraînement motorisé pour l'entraînement d'un moyen de transport, en particulier un fauteuil roulant à actionner manuellement, le dispositif d'entraînement comportant:
au moins une roue d'entraînement (120) propre à être entraînée de façon motorisée, qui peut être amenée au choix à partir d'une position de repos, dans laquelle elle est relevée pour ne pas être en contact avec la surface de roulement (500), dans une position de service, dans laquelle elle est appliquée sur la surface de roulement (500),
**caractérisé en ce que** le dispositif d'entraînement comporte un élément à ressort (140), qui est relié à ladite au moins une roue d'entraînement et est muni d'une position finale d'inversion définie et qui est conçu pour pousser avec une force de pression prédéfinie ladite au moins une roue d'entraînement (120) dans la position de service contre la surface de roulement (500), l'élément à ressort (140) étant relié fonctionnellement à un mécanisme d'inversion qui, dans la position finale d'inversion de l'élément à ressort, permet en alternance un blocage de l'élément à ressort et un déblocage pour le déploiement de l'élément à ressort, et
un élément d'actionnement (130) qui est conçu pour relever ladite au moins une roue d'entraînement (120), sachant que sous l'effet d'un levage de ladite au moins une roue d'entraînement (120) au-delà de sa position de repos, l'élément à ressort (140) atteint sa position finale d'inversion, dans laquelle le mécanisme d'inversion induit un processus d'inversion entre le blocage et le déblocage.

2. Dispositif d'entraînement selon la revendication 1, **caractérisé par** un élément de verrouillage (170) qui fait en sorte que l'élément à ressort (140) ne peut pas atteindre sa position finale d'inversion lorsque l'élément d'actionnement (130) est dans une position prédéfinie.

3. Dispositif d'entraînement selon la revendication 1 ou 2, **caractérisé en ce que** l'élément d'actionnement (130) est une pédale.

4. Dispositif d'entraînement selon la revendication 1, 2 ou 3, **caractérisé en ce que** l'élément d'actionnement (130) peut être amené dans une position de repos, dans laquelle il n'est pas en prise avec ladite au moins une roue d'entraînement (120).

5. Dispositif d'entraînement selon la revendication 4, **caractérisé en ce que**, lorsque le dispositif d'entraînement en position accouplée est prêt à être manoeuvré, l'élément d'actionnement (130), dans la position de repos, est amené dans une position orientée sensiblement perpendiculairement à la surface de roulement (500).

6. Dispositif d'entraînement selon la revendication 4 ou 5, **caractérisé en ce que** la position de repos est la position prédéfinie de l'élément d'actionnement (130), dans laquelle l'élément de verrouillage (170) fait en sorte que l'élément à ressort (140) ne peut pas atteindre sa position finale d'inversion.

7. Dispositif d'entraînement selon l'une quelconque des revendications précédentes, **caractérisé en ce que** l'élément d'actionnement (130) est relié à un arbre pivotant (150) de l'élément d'actionnement, et l'élément de verrouillage (170) est agencé sur l'arbre pivotant (150) de l'élément d'actionnement.

8. Dispositif d'entraînement selon l'une quelconque des revendications précédentes, **caractérisé en ce que** deux roues d'entraînement (120) sont prévues.

9. Dispositif d'entraînement selon l'une quelconque des revendications précédentes, **caractérisé en ce que** la ou les roues d'entraînement (120) peuvent être relevées conjointement avec une unité d'entraînement comportant le moteur d'entraînement et une boîte de vitesses mise optionnellement à disposition.

10. Dispositif d'entraînement selon l'une quelconque des revendications précédentes, **caractérisé en ce que** le mécanisme d'inversion est configuré selon le principe push-push déjà connu par exemple à partir de l'application aux stylos à bille.

11. Dispositif d'entraînement selon l'une quelconque des revendications précédentes, **caractérisé en ce que** le mécanisme d'inversion est intégré dans l'élément à ressort (140).
